# EUROPEAN PATENT APPLICATION

(11) **EP 4 769 440 A1**
(43) Date of publication of application: **01.07.2026**
(21) Application number: 24856610.1
(22) Date of filing: 12.06.2024
(51) Int. Cl.: G21D 1/00, G21F 5/005, G21F 5/06

(54) **METHOD FOR CUTTING NUCLEAR REACTOR AND INSERTING CUT MATERIALS**

(30) Priority: 24.08.2023 KR 20230110935
(71) Applicant: Korea Hydro & Nuclear Power Co., Ltd, Gyeongju-si, Gyeongsangbuk-do 38120 (KR)
(72) Inventor: LEE, Mi Hyun, Daejeon 34101 (KR); HWANG, Young Hwan, Daejeon 34101 (KR); KIM, Cheon Woo, Daejeon 34101 (KR)
(74) Representative: Habermann, Hruschka & Schnabel
(86) International application number: PCT/KR2024/008014
(87) International publication number: WO 2025/041994

(57) **Abstract**

The present invention relates to a method for cutting a nuclear reactor and inserting cut materials, the method comprising the steps of: preparing cut materials by cutting a nuclear reactor through a plurality of processes; classifying the cut materials into a plurality of stack shapes; and inserting the cut materials into a packaging container according to the stack shapes, wherein the packaging container includes an external container, an internal container and a cover, and the inserting step includes the steps of: preparing the external container; accommodating the internal container in the external container; and mounting the cover on the upper portion of the internal container.

## Description

### Technical Field

The present disclosure relates to a method for cutting a reactor and loading cut sections thereof.

### Background Art

Upon the termination of operation of a nuclear power plant, when decommissioning of the nuclear power plant is required, a reactor should also be dismantled.

A reactor is generally made of carbon steel and undergoes neutron irradiation, such that majority of the reactor is classified as very low-level radioactive waste or low-level radioactive waste. The development of cutting technologies and packaging technologies for precisely cutting a reactor that is classified as very low-level radioactive waste or low-level radioactive waste and then safely disposing of the cut reactor at a disposal site is a core technology for safe dismantling.

### Disclosure

### Technical Problem

The present disclosure is intended to provide a method for cutting a reactor and loading cut sections thereof.

### Technical Solution

The object of the present disclosure is achieved by a method for cutting a reactor and loading cut sections thereof, the method comprising: cutting the reactor through a plurality of processes to obtain the cut sections; classifying the cut sections into a plurality of loading shapes; and loading the cut sections into a packaging container based on the loading shapes, wherein the packaging container includes an outer container, an inner container, and a cover, wherein the loading of the cut sections includes: preparing the outer container; accommodating the inner container in the outer container; and mounting the cover on an upper portion of the inner container.

The inner container may accommodate the cut sections therein to prevent damage or deformation of the outer container resulting from direct contact with the cut sections.

The cut sections may include low-level radioactive waste or very low-level radioactive waste.

The cut sections may be accommodated in the inner container through underwater cutting, and the inner container may be formed as a tubular body, and have a plurality of through-holes defined in side surfaces and a bottom surface thereof to drain liquid introduced during accommodation of the cut sections.

The packaging container may further include an auxiliary cover mounted in the cover, the cover may serve as a grouting port and have a recessed area defined at a center thereof, wherein the recessed area has a plurality of mounting grooves defined therein, the auxiliary cover may have a plurality of protrusions formed on a bottom surface thereof, and the auxiliary cover may be accommodated in the recessed area of the cover, and the protrusions may be inserted into the mounting grooves.

The outer container may comprise at least one pair of outer containers, and the packaging container may further include: a transport container configured to accommodate the at least one pair of outer containers therein; and a transport container cover configured to cover and close an upper portion of the transport container.

The transport container may have dimensions of 1.6m[W] x 3.4m[L] x 1.2m[H].

An upper peripheral edge of the cover may be bolted and fixed to the outer container by a bolting member.

### Advantageous Effects

According to the present disclosure, the method for cutting a reactor and loading cut sections thereof is provided.

### Description of Drawings

FIG. 1 is a flowchart illustrating a method for cutting a reactor and loading cut sections thereof according to an embodiment of the present disclosure;
FIG. 2 illustrates reactor cutting processes in the method for cutting a reactor and loading cut sections thereof according to an embodiment of the present disclosure;
FIG. 3 is an exploded perspective view of a packaging container in the method for cutting a reactor and loading cut sections thereof according to an embodiment of the present disclosure; and
FIG. 4 is a perspective view illustrating a state in which all components illustrated in FIG. 3 are assembled.

### Mode for Invention

Hereinafter, preferred embodiments of the present disclosure will be described in detail with reference to the accompanying drawings. Advantages and features of the present disclosure and methods for achieving the same will become apparent with reference to embodiments described below in detail in conjunction with the accompanying drawings. However, the present disclosure is not limited to the embodiments disclosed herein and may be embodied in various different forms. The embodiments are provided merely to complete the disclosure of the present disclosure and to fully inform those having ordinary skill in the art of the scope of the invention, and the present disclosure is defined only by the scope of the claims. Throughout the present document, the same reference numerals refer to the same components.

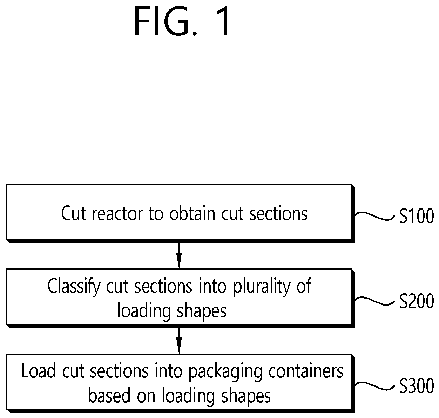

Referring to FIG. 1, a method for cutting a reactor and loading cut sections thereof according to an embodiment of the present disclosure will be described.

First, a reactor is cut through a plurality of processes to obtain cut sections (S100).

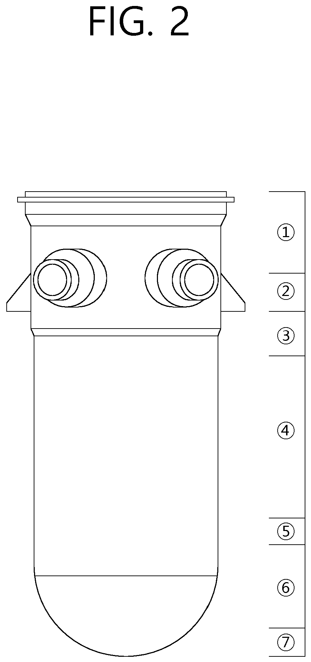

FIG. 2 illustrates reactor cutting processes in the method for cutting a reactor and loading cut sections thereof according to an embodiment of the present disclosure. A reactor RV may be cut into seven major sections using an L-cut method in consideration of a geometric structure thereof. The cutting may be performed underwater and using a laser or the like.

The seven sections from the cutting process are divided along a height of the reactor, and reference numerals ① to ⑦ illustrated on the right side of FIG. 2 indicate the seven sections. An outlet nozzle and an inlet nozzle are set to be processed in separate processes.

Next, the cut sections are classified into a plurality of loading shapes (S200).

The cut sections generated in the respective processes are loaded into rectangular packaging containers. In consideration of sizes and shapes of the cut sections, the cut sections are classified into a total of 28 loading shapes and loaded into a total of 50 packaging containers. The outlet nozzle is loaded into two packaging containers having the same loading shape and one packaging container having a different loading shape, and the inlet nozzle is loaded into two packaging containers having the same loading shape and another two packaging containers having the same loading shape.

Information such as the structure loaded therein, the mass of the cut sections, the total mass after cement grouting, total radioactivity, and the like is recorded for each packaging container, and such information is used as essential data for a disposal suitability inspection after the packaging container is sent to a disposal site.

Next, the cut sections are loaded into the packaging containers based on the loading shapes (S300).

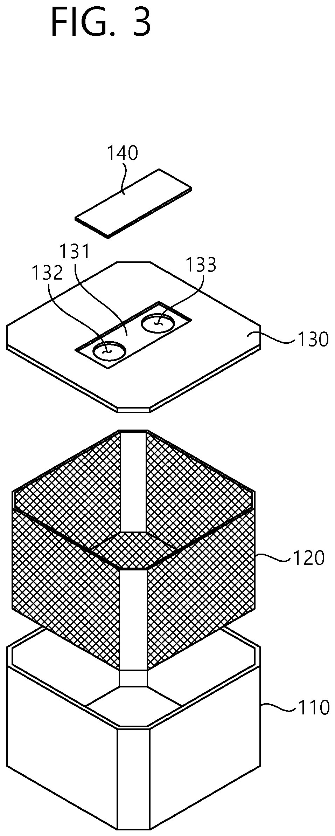

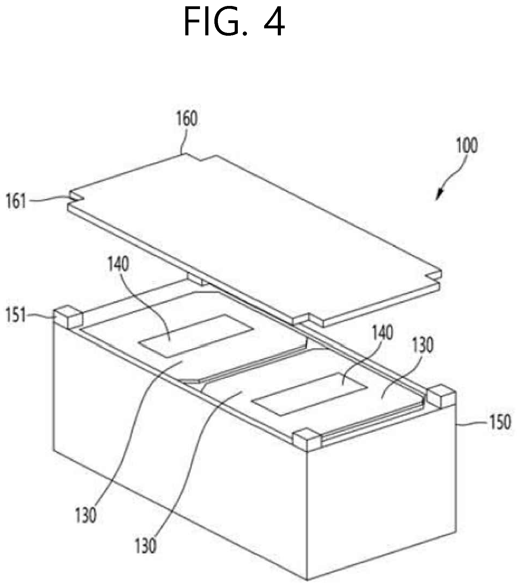

Referring to FIGS. 3 and 4, a reactor cut-section packaging container (hereinafter, referred to as a "packaging container 100") according to an embodiment of the present disclosure includes an outer container 110, an inner container 120, a cover 130, an auxiliary cover 140, a transport container 150, and a transport container cover 160.

The outer container 110 of the packaging container 100 has an internal space defined in a predetermined shape. The inner container 120 of the packaging container 100 also has an internal space defined in a predetermined shape. In addition, the inner container is accommodated in the outer container 110.

In addition, the cover 130 of the packaging container 100 is mounted on an upper portion of the inner container 120. The inner container 120 accommodates cut sections 10 therein. The inner container 120 prevents damage or deformation of the outer container 110 resulting from direct contact with the cut sections 10.

The cut sections accommodated in the inner container 120 include low-level radioactive waste or very low-level radioactive waste. The cut sections may be accommodated in the inner container 120 through underwater cutting.

The inner container 120 is formed as a tubular body and allows drainage of liquid introduced during accommodation of the cut sections 10. To this end, a plurality of through-holes are defined in side surfaces and a bottom surface of the inner container 120.

The auxiliary cover 140 of the packaging container 100 is mounted in the cover 130. The cover 130 serves as a grouting port and has a recessed area 131 defined at a center thereof. A plurality of mounting grooves 132 and 133 are defined in the recessed area 131.

The auxiliary cover 140 has a plurality of protrusions formed on a bottom surface thereof. The auxiliary cover 140 is accommodated in the recessed area 131 of the cover 130, and the protrusions are inserted into the mounting grooves 132 and 133.

The transport container 150 of the packaging container 100 accommodates at least one pair of outer containers 110 therein. The transport container cover 160 of the packaging container 100 covers and closes an upper portion of the transport container 150.

The transport container 150 may have dimensions of approximately 1.6M[W] X approximately 3.4M[L] X approximately 1.2M[H]. An upper peripheral edge of the cover 130 is bolted and fixed to the outer container 110 by, for example, a bolting member.

One or more cut sections of the same type may be accommodated in the inner container 120. Alternatively, the cut sections may be accommodated while being laid on a bottom of the inner container 120. Further, the cut sections may be accommodated in different sizes.

Referring to FIG. 4, the transport container 150 is formed in a rectangular structure.

A method for assembling the reactor cut-section packaging container is as follows.

The inner container 120 is accommodated in the outer container 110. The cover 130 is mounted on the upper portion of the inner container 120.

In this regard, the inner container 120 accommodates the cut sections therein and prevents damage or deformation of the outer container 110 resulting in direct contact with the cut sections 10.

The cut sections are accommodated in the inner container 120 through underwater cutting. The inner container 120 is formed as a tubular body, and has a plurality of through-holes defined in the side surfaces and the bottom surface thereof to drain liquid introduced during accommodation of the cut sections.

Further, the auxiliary cover 140 is mounted in the cover 130. The cover 130 serves as a grouting port and has the recessed area 131 defined at the center thereof, in which the plurality of mounting grooves 132 and 133 are defined.

The auxiliary cover 140 has the plurality of protrusions formed on the bottom surface thereof. The auxiliary cover 140 is accommodated in the recessed area 131 of the cover 130, and the protrusions are inserted into the mounting grooves 132 and 133.

In this regard, at least one pair of outer containers 110 are accommodated in the transport container 150. The transport container cover 160 covers and closes the upper portion of the transport container 150. The upper peripheral edge of the cover 130 is mounted on the outer container 110.

According to the present disclosure described above, a method for establishing reactor cutting processes and classifying and packaging generated cut sections by part and by weight is provided, which is a very important technology for promoting economical and safe nuclear power plant decommissioning.

Although the embodiments of the present disclosure have been described above with reference to the accompanying drawings, those having ordinary skill in the art will understand that the present disclosure may be embodied in other specific forms without departing from the technical spirit or essential characteristics thereof. Accordingly, the embodiments described above are to be understood as illustrative and not restrictive in all respects.

## Claims

1. A method for cutting a reactor and loading cut sections thereof, the method comprising:
cutting the reactor through a plurality of processes to obtain the cut sections;
classifying the cut sections into a plurality of loading shapes; and
loading the cut sections into a packaging container based on the loading shapes,
wherein the packaging container includes an outer container, an inner container, and a cover,
wherein the loading of the cut sections includes:
preparing the outer container;
accommodating the inner container in the outer container; and
mounting the cover on an upper portion of the inner container.

2. The method of claim 1, wherein the inner container accommodates the cut sections therein to prevent damage or deformation of the outer container resulting from direct contact with the cut sections.

3. The method of claim 2, wherein the cut sections include low-level radioactive waste or very low-level radioactive waste.

4. The method of claim 1, wherein the cut sections are accommodated in the inner container through underwater cutting,
wherein the inner container is formed as a tubular body, and has a plurality of through-holes defined in side surfaces and a bottom surface thereof to drain liquid introduced during accommodation of the cut sections.

5. The method of claim 1, wherein the packaging container further includes an auxiliary cover mounted in the cover,
wherein the cover serves as a grouting port and has a recessed area defined at a center thereof, wherein the recessed area has a plurality of mounting grooves defined therein,
wherein the auxiliary cover has a plurality of protrusions formed on a bottom surface thereof,
wherein the auxiliary cover is accommodated in the recessed area of the cover, and the protrusions are inserted into the mounting grooves.

6. The method of claim 1, wherein the outer container comprises at least one pair of outer containers,
wherein the packaging container further includes:
a transport container configured to accommodate the at least one pair of outer containers therein; and
a transport container cover configured to cover and close an upper portion of the transport container.

7. The method of claim 6, wherein the transport container has dimensions of 1.6m[W] x 3.4m[L] x 1.2m[H].

8. The method of claim 1, wherein an upper peripheral edge of the cover is bolted and fixed to the outer container by a bolting member.
